(19) Europäisches Patentamt

European Patent Office

Office européen des brevets

(11) Veröffentlichungsnummer: **0 344 584 B1**

# (12) EUROPÄISCHE PATENTSCHRIFT

(45) Veröffentlichungstag der Patentschrift: **11.08.93**

(21) Anmeldenummer: **89109304.9**

(22) Anmeldetag: **23.05.89**

(51) Int. Cl.⁵: **B65G 53/56**, F16K 5/18

(54) **Dichtungsanordnung.**

(30) Priorität: **03.06.88 DE 3818873**
**15.07.88 DE 3824023**
**11.01.89 DE 3900580**

(43) Veröffentlichungstag der Anmeldung:
**06.12.89 Patentblatt 89/49**

(45) Bekanntmachung des Hinweises auf die
Patenterteilung:
**11.08.93 Patentblatt 93/32**

(84) Benannte Vertragsstaaten:
**BE CH DE FR GB LI NL**

(56) Entgegenhaltungen:
**EP-A- 0 016 435      EP-A- 0 104 504**
**EP-A- 0 175 531      DE-A- 1 918 804**
**DE-A- 2 448 436      GB-A- 907 621**
**GB-A- 2 135 389      US-A- 1 901 961**
**US-A- 4 669 505**

(73) Patentinhaber: **ZEPPELIN SCHÜTTGUTTECH-
NIK GmbH
Birkenweg 4
W-7987 Weingarten(DE)**

(72) Erfinder: **Krambrock, Wolfgang Dipl.-Ing.
Aichenwiesen 18
W-7981 Vogt(DE)**
Erfinder: **Bercx, Helmut Dipl.-Ing.
Sankt-Ulrich-Weg 5
W-7962 Wolfegg(DE)**

(74) Vertreter: **Patentanwälte Dipl.-Ing. E. Eisele
Dr.-Ing. H. Otten
Seestrasse 42
W-7980 Ravensburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Dichtungsanordnung nach dem Oberbegriff des Anspruchs 1.

Absperrorgane gemäß der Erfindung sind Hähne oder Drehschieber, die ein als Hahnküken oder Drehküken bezeichnetes Abschlußteil aufweisen, welches kegelig, zylindrisch oder kugelförmig ausgebildet sein kann. Je nach Bauart besitzt das Hahnküken Durchgänge in I-, L-, T-, X- oder V-Form, die durch Drehen des Kükens in die gewünschte Betriebsstellung gebracht werden. Die Abdichtung derartiger Drehschieber nach außen hin und die ihrer Anschlußleitungen bereitet oftmals Probleme. Aus der DE-OS 21 48 557 ist ein derartiges, als Rohrweiche bezeichnetes Absperrorgan bekannt geworden, bei welchem die Endöffnungen des Drehkükens mit diesen umgreifenden, aufblasbaren Dichtungen versehen sind, welche sich im aufgeblasenen Zustand fest zwischen Küken und Gehäuseinnenwandung anlegen.

Bei Druckentlastung zieht sich die Ringdichtung wieder in die Ringnut zurück und schleift beim Verschwenken des Kükens nicht mehr an der Gehäuseinnenwand. Hierdurch ist eine einfache und mit wenig Kraftaufwand verbundene Verschwenkbarkeit des Drehkükens möglich. Die Druckbeaufschlagung der Ringdichtung erfolgt mittels Ventilen, die in Abhängigkeit der Verschwenklage des Kükens steuerbar sind. Der Vorteil dieser Anordnung liegt darin, daß nur die beiden Endöffnungen des Drehkükens mit Ringdichtungen versehen sind. Die Anzahl der Anschlußöffnungen und eine dementsprechende Abdichtung in diesem Bereich spielt demnach keine Rolle.

Nachteilig an dieser bekannten Anordnung sind die nur auf Spezialmaschinen herzustellenden Ringnuten bei einem derartigen Drehküken. Als Dichtung kommt darüber hinaus nur eine Art aufblasbarer Schlauch in Betracht, der selbst im allgemeinen keine Dichtfunktion übernehmen kann. Deshalb ist zwischen der aufblasbaren Dichtung und dem Gehäuseinneren eine zusätzliche Manschette als Dichtungsorgan vorgesehen. Diese Manschette reibt aber stets in irgendeiner Form an der Gehäuseinnenwandung, was zu einer Schwergängigkeit und zu Verschleiß führen kann. Nachteilig ist weiterhin ein aufwendiger Drehanschluß für die Luftzuführung zum Drehküken.

Bei einer weiteren bekannten Bauform gemäß DE-OS 15 50 132 ist ein Absperrhahn bekannt geworden, der zur Abdichtung zwischen Gehäuse und Drehküken eine Ringdichtung in der jeweiligen Endöffnung des Gehäuseanschlußflansches verwendet, wobei die Ringdichtung in einer zur Bohrungslängsachse radial verlaufenden Nut angeordnet ist und gegen einen zusätzlichen Druckring einwirkt, der gegen das Drehküken selbst verspannt ist. Diese Art der Dichtung hat den Nachteil, daß sie infolge ihrer notwendigen Vorspannung zu einer Schwergängigkeit des Drehkükens führt.

Die gleiche zuvor beschriebene Problematik ergibt sich grundsätzlich auch bei allen Vorrichtungen mit einer abzudichtenden Gehäuseöffnung, die durch einen zur Gehäuseöffnung quer verlaufenden Schieber o. dgl. verschlossen werden soll. Während des Öffnungs- oder Schließvorganges befindet sich stets ein Teil der die Gehäuseöffnung umgebenden Ringdichtung ohne Gegenwandung, was unter Umständen zu einem Herausspringen der Dichtung aus der Ringnut führen kann. Außerdem wird die Dichtung beim Verschließen der Öffnung stets auf Scherung beansprucht, was zu einer seitlichen Beschädigung oder zu einem Herausreißen der Dichtung führen kann.

Das mit der Erfindung angesprochene Problem kann in Drehschiebern und Mehrwegventilen jeglicher Art auftreten, bei denen Öffnungen durch ein bewegtes Maschinenbauteil druckdicht zu verschließen sind. Gleichermaßen kann das Problem auch bei abzudichtenden Längsschiebern auftreten.

Der Erfindung liegt die Aufgabe zugrunde, eine Dichtungsanordnung an bewegten Maschinenteilen und insbesondere eine Dichtung zur Verwendung an einem Drehschieber vorzuschlagen, die insbesondere bei gewölbten Abdichtungsflächen anwendbar und mit einfachen Maßnahmen ohne komplizierte Bearbeitungsmaschinen hergestellt ist. Insbesondere soll die Dichtung leicht einsetzbar sein und eine leichte Beweglichkeit der Maschinenteile gegeneinander gewährleisten. Aufgabe ist es weiterhin, daß eine Dichtungsanordnung geschaffen wird, die sich selbständig bei Druckentlastung in die Ausgangslage zurückstellt und bei einem Verklemmen zwischen der Dichtung und dem beweglichen Maschinenteil nicht herausfällt.

Diese Aufgabe wird erfindungsgemäß durch die kennzeichnenden Merkmale des Anspruchs 1 gelöst.

In den Unteransprüchen sind vorteilhafte und zweckmäßige Weiterbildungen der erfindungsgemäßen Dichtungsanordnung angegeben.

Die Erfindung geht prinzipiell von dem gleichen Grundgedanken aus, wie er in der DE-A-21 48 557 verwirklicht ist. Erfindungsgemäß wird jedoch ein Ringspalt oder Ringkanal im Anschlußflansch des Gehäuses geschaffen, wobei hinter der Ringdichtung bzw. in der Ringdichtung selbst ein Druckraum für Druckmedium vorgesehen ist, der zu einer Längsverschiebbarkeit der Dichtung nach Art eines ringförmigen Kolbens führt, um die Ringdichtung selbst oder einen gleitfähigen, flexiblen, gegen Verdrehen gesicherten Zwischenring gegen das abzudichtende Maschinenteil zu pressen. Diese Anordnung hat gegenüber der bekannten Einrichtung den Vorteil, daß die Dichtung in einem stationären Teil im Gehäuse und nicht in einem beweglichen Teil wie z. B. einem Drehküken angeordnet ist. Hierdurch entfallen aufwendige und kostspielige Anschlußmittel zur Beaufschlagung der Dichtung mit Druckmedium. Der hinter der Dichtung befindliche Ringkanalbereich dient als Druckraum zur Beaufschlagung der Ringdichtung, die sich dann nach Art eines ringförmigen Kolbens axial gegen das abzudichtende Maschinenteil preßt. Dabei geschieht die Druckbeaufschlagung grundsätzlich nur im stationären Zustand, d. h. wenn das bewegliche Maschinenteil seine gewünschte Endlage angenommen hat. Die Bewegung selbst erfolgt im drucklosen Zustand, so daß eine leichte Verstellbarkeit des beweglichen Maschinenteils gewährleistet ist. Anstelle oder zusätzlich zum Druckraum hinter der Dichtung kann die erfindungsgemäße Anordnung auch einen innerhalb der Dichtung befindlichen Druckraum aufweisen, der eine axiale Verschiebbarkeit der Dichtung ermöglicht. Maßgeblich ist die freie Bewegbarkeit der Dichtung in Richtung zum abzudichtenden Maschinenteil, wobei sich die Dichtung im drucklosen Zustand vom Maschinenteil wieder abhebt und während der Verstellung des Kükens keinem Reibungsverschleiß unterliegt. Es sollen deshalb Maßnahmen vorgesehen sein, die es verhindern, daß die Dichtung aus dem Ringkanal heraustritt. Dies gilt insbesondere für die Phase, wo die Dichtung ohne Gegendruck durch ein Maschinenelement ist.

So kann der Ringkanal im Anschlußflansch durch eine Gehäusehinterschneidung gebildet sein, dessen Nutgrund rechtwinklig zur Anschlußleitungsmittelachse steht. Hierdurch weist der Ringkanal an jeder Stelle eine andere Tiefe auf. Der Ringkanal ist jedoch mit einfachen Maschinen, z. B. konventioneller Drehbank herstellbar. Ein zusätzliches Einschubrohr auf der Innenseite begrenzt den Ringkanal nach innen.

Die Erfindung sieht vor, daß die Abstützung und die Rückstellung der aufblasbaren Ringdichtung im Ringkanal dadurch erfolgt, daß diese an ihrer Rückseite fest mit einem Ringeinsatz verbunden ist, der seinerseits ortsfest im Anschlußflansch angeordnet ist. Dieser Ringeinsatz kann aus einem gegossenen Präzisionsteil bestehen und so der speziellen Formgebung des Ringkanals angepaßt werden. Der gegenüber dem Drehschiebergehäuse asymmetrisch angeordnete Anschlußflansch erhält demnach eine Ringkanalausnehmung, die in ihrer axialen Tiefe an jeder Stelle unterschiedlich ist, wobei zur einfachen Herstellung der Nutgrund mit der Achse des Ringkanals einen Winkel von 90° bildet. Dieser Ringkanal wird dann mit dem gegossenen Ringeinsatz in seiner Formgebung ausgefüllt, so daß die aufblasbare Ringdichtung hieran befestigt werden kann und dreiseitig formschlüssig abgestützt ist.

Vorteilhaft ist, wenn die aufblasbare Ringdichtung an ihrer dem Drehküken zugewandten Stirnseite V-förmig ausgebildet ist, wobei die beiden seitlichen Schenkel zur Herstellung einer Linienberührung der V-förmigen Spitze im drucklosen Zustand nicht zur Auflage auf das Drehküken kommen.

In vorteilhafter Weiterbildung der Erfindung sind die zuvor angesprochenen Dichtungsarten seitlich in den Ringkanal bzw. die Dichtungsnut eingeklebt. Hierdurch werden die Seitenflächen der Ringdichtung stets in ihrer Lage gehalten, während der mittlere Teil durch Druckbeaufschlagung nach unten gegen das Maschinenelement bewegbar ist.

Wie zuvor erwähnt, kann die Dichtung auch in ihrem Inneren einen aufblasbaren Dichtungsraum enthalten, der zum Andrücken der Dichtung gegen das Maschinenelement führt.

Weitere Vorteile sind in der nachfolgenden Beschreibung anhand der Ausführungsbeispiele beschrieben. Es zeigen

Fig. 1, 1a eine allgemeine Erläuterung für die Anwendung der erfindungsgemäßen Dichtungsanordnung gemäß Fig. 2 und 3 an einem Drehschieber mit Hahnküken mit V-förmigen Anschlußleitungen, wobei Fig. 1a eine Detailansicht von Fig. 1 ist.

Fig. 2 ein Ausführungsbeispiel der Erfindung mit einem im Ringkanal eingesetzten Ringeinsatz zur festen Verbindung mit der Ringdichtung

Fig. 3 ein Ausführungsbeispiel für eine Dichtung mit einer inneren Halterung.

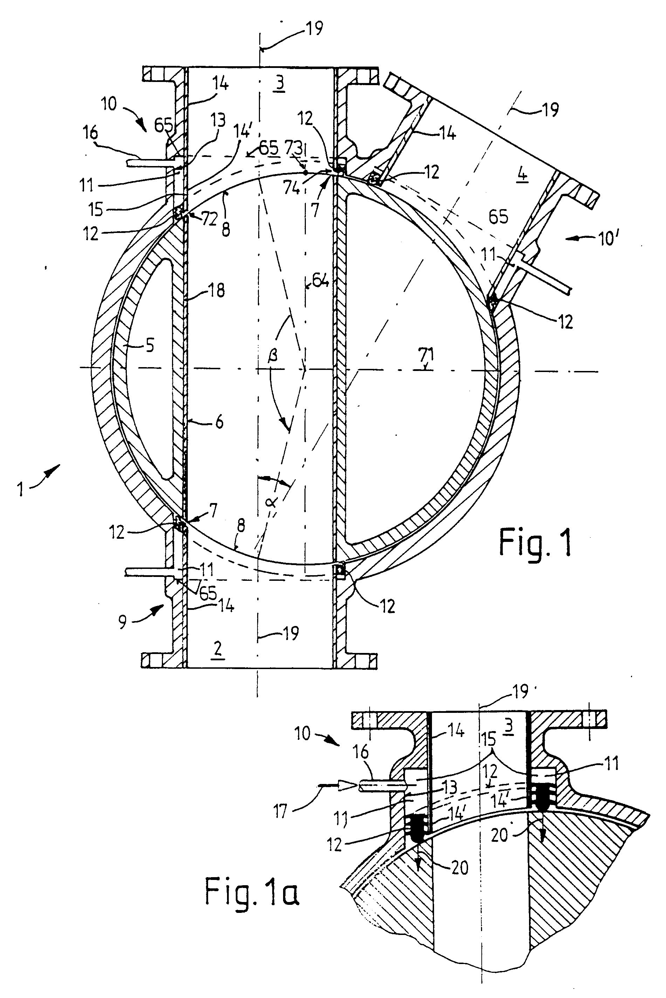

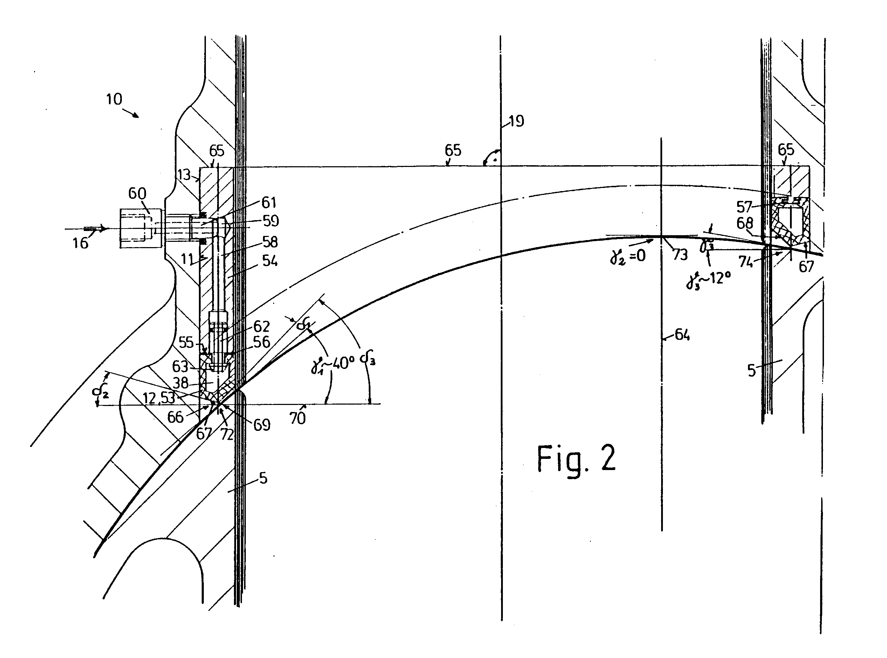

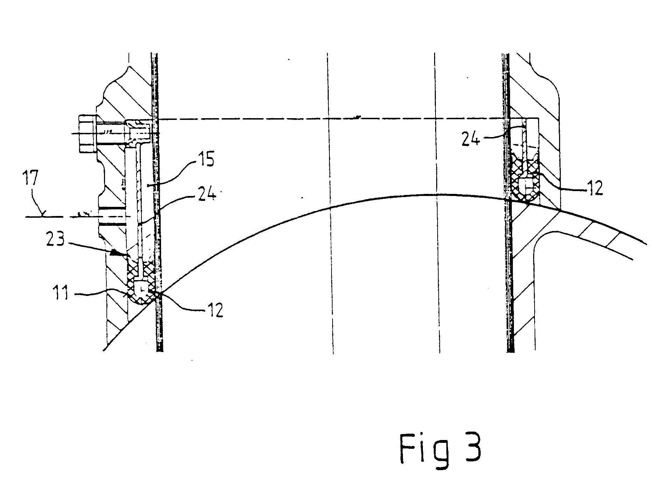

Der in Fig. 1, 1a dargestellte Drehschieber dient der allgemeinen Erläuterung für die Anwendung der vorliegenden Erfindung, wie sie in Fig. 2 und Fig. 3 näher dargestellt ist. Eine solche Dichtungsanordnung dient vorzugsweise zum Transport von staub-, pulver- oder grobkörnigen Feststoffen mit Hilfe eines strömenden Gases durch pneumatische Förderleitungen. Im Gegensatz zum Transport von reinen Flüssigkeiten oder Gasen unterliegen bei einer derartigen Anordnung die bewegten Teile und insbesondere die Abzweigeinrichtungen bzw. das Drehküken durch den Feststoffanteil einem erheblichen Verschleiß.

Bei dem in Fig. 1 dargestellten Dreiweg-Drehschieber 1 erfolgt der Transport eines Gas-Feststoffgemisches von einer ankommenden Rohrleitung 2 wahlweise in zwei abführende Rohrleitungen 3, 4, die unter einem Winkel zueinander angeordnet sind. Um die Strömungsrichtung zu bestimmen, ist ein Drehküken 5 vorgesehen, welches eine Durchgangsbohrung 6 aufweist. In Fig. 1 sind die Anschlußleitungen 2 und 3 über die Durchgangsbohrung 6 im Drehküken miteinander verbunden. Will man die Anschlußleitung 2 mit der Anschlußleitung 4 verbinden, so muß das Drehküken um den Winkel $\beta$ gedreht werden, damit die aufeinander passenden Anschlußöffnungen zwischen den Anschlußflanschen und dem Drehküken aneinanderliegen. Bei der Durchführung der Drehbewegung des Drehkükens 5 um den Winkel $\beta$ zur Verbindung der Anschlußleitung 2 mit der Anschlußleitung 4 überstreichen die Kanten 7 der Austrittsöffnungen 8 der Durchgangsbohrung 6 des Drehkükens 5 den äußeren Abdichtungsbereich im zugehörigen Anschlußflansch 9, 10 der Rohrleitungen 2, 3. Sofern der jeweilige Anschlußflansch 9, 10 mit einem handelsüblichen O-Ring abgedichtet wäre, kann dieser ohne den radialen Druck des Drehkükens 5 im Bereich der den O-Ring überstreichenden Austrittsöffnung 8 aus der entsprechenden O-Ring-Nut herausgleiten. Außerdem wird der O-Ring zusätzlich durch die Kante 7 auf Scherung beansprucht. Dieser Vorgang wird verstärkt durch das Verhalten der staub-, pulver-oder grobkörnigen Feststoffen in den Transportleitungen.

Wie aus Fig. 1 und in vergrößerter Darstellung insbesondere aus Fig. 1a anhand des oberen Anschlußflansches 10 ersichtlich, wird die noch näher zu erläuternde Dichtungsanordnung durch einen Ringkanal 11 gebildet, in dem sich die Ringdichtung 12 befindet. Der Ringkanal 11 entsteht durch eine durch Ausspindelung der Anschlußleitung sich ergebende Wandungshinterschneidung 13 im jeweiligen Anschlußflansch 9, 10 bzw. 10' und ein in den Anschlußflansch 9, 10, 10' eingelassenes Rohr 14. Der innere Rohrabschnitt 14' bildet dann die Innenwandung für den Ringkanal 11. Im jeweiligen Anschlußflansch 9, 10, 10' wird demnach nicht nur eine Ringnut mit den gleichen Abmaßen wie die Ringdichtung selbst, sondern ein sich axial parallel zur Mittelachse 19 des jeweiligen Anschlußflansches erstreckender Ringkanal 11 gebildet. Der hinter der Ringdichtung 12 angeordnete Raum 15 wird als Druckraum bezeichnet. Hierfür ist eine Druckanschlußleitung 16 vorgesehen. Der in Fig. 1a dargestellte Pfeil 17 deutet die Druckbeaufschlagung des Druckraums 15 an.

In Fig. 1 ist das Innenrohr 14 zur Bildung des Ringkanals 11 für die Ringdichtung 12 in allen drei Anschlußflanschen 9, 10, 10' dargestellt. Dieses Rohr ist als dünnwandiges Rohr, z. B. aus Chromnickelstahl, in die jeweiligen Anschlußflansche eingesetzt. Es kann sich auch - wie in Fig. 1 dargestellt - als dünnwandiges Rohr 18 im Drehküken 5 befinden. Hierdurch können die Gehäuseteile des Drehschiebers 1 sowie das Drehküken 5 selbst aus einem Gußmaterial hergestellt werden, wobei die Durchgangsbohrungen und auch ggf. der Umfang des Drehkükens platiert sind mit einem hochwertigen Material, wie z. B. Chromnickelstahl.

Die Anschlußflansche 9, 10, 10' der Rohrleitungen 2, 3, 4 sind prinzipiell gleich aufgebaut und wie zu Fig. 1a am Beispiel des Anschlußflansches 10 der Rohrleitung 3 beschrieben.

Die Ringdichtung 12 ist im Ringkanal 11 angeordnet und umschließt das Rohr 14 in seinem unteren Rohrabschnitt 14' kraftschlüssig. Beaufschlagt man den hinter der Ringdichtung 12 liegenden Druckraum 15 mit Druckmedium, z. B. Druckluft, so wird die Ringdichtung nach Art eines ringförmigen Kolbens axial parallel zur Längsachse 19 verschoben (s. Pfeil 20 in Fig. 1a) und direkt oder über einen flexiblen, das Einschubrohr 14 lose umschließenden, sehr gleitfähigen, gegen Verdrehen gesicherten Zwischenring 26 gegen das bewegte Maschinenteil 5, im Ausführungsbeispiel das Drehküken 5, gepreßt.

Bei dem in der Fig. 2 dargestellten Ausführungsbeispiel der Erfindung soll eine Fixierung der aufblasbaren Ringdichtung 12, 53 dadurch erfolgen, daß diese mit einem Ringeinsatz 54 fest verbunden ist. Der Ringeinsatz 54 ist als Präzisionsgußteil an den Ringkanal 11 in seiner Formgebung genau angepaßt, so daß die Lage der Ringdichtung 12, 53 im Ringkanal 11 genau fixiert ist. In der noch zu beschreibenden Darstellung nach Fig. 3 wird dem gegenüber die Ringdichtung 12 mit einer durch Längsstreben 24 gebildeten Halterung in ihrer axialen Lage gehalten. Beim Ausführungsbeispiel nach Fig. 2 wird diese Halterung dahingehend optimiert, indem die Ringdichtung 12, 53 mit ihrer rückwärtigen Stirnseite 55 fest mit dem Ringeinsatz 54 verbunden ist. Dies kann beispielsweise durch eine schematisch dargestellte Klebeverbindung 56 oder eine schematisch dargestellte formschlüssige Verbindung 57 erfolgen. Der Ringeinsatz 54 weist wenigstens eine Längsbohrung 58 zur Zuführung des Druckmediums, insbesondere zur Luftzuführung zum Druckraum 38 der Ringdichtung 12, 53, auf. Diese Längsbohrung 58 mündet im oberen Bereich in eine Querbohrung 59, die auch als Anschlußbohrung zur Aufnahme eines Druckmedium-Zuführungsventils 60 bzw. eine Luftzufuhranschlußleitung 60 dient. Dieses Luftzufuhrventil weist in seinem vorderen Bereich einen am Umfang abgedichteten Ventilkörper 61 auf, der radial in den Ringeinsatz 54 hineinragt und diesen damit in seiner Lage fixiert.

Der Ringeinsatz 54 weist an seiner der Ringdichtung 12, 53 zugewandten Stirnseite 55 einen am Umfang abgedichteten Verbindungsstutzen 62 auf, der in seinem vorderen Bereich einen pilzförmigen Anschlußnippel 63 aufweist. Dieser Anschlußnippel wird durch die Rückseite der elastischen Ringdichtung hindurchgestoßen und ragt mit seinem vorderen Ende in den Druckraum 38 der Ringdichtung 12, 53 hinein.

Wie aus den Figuren 1, 2 sowie 3 ersichtlich, ist der Ringkanal 11 in seiner Formgebung aufgrund der außermittigen Lage der Anschlußflansche 9, 10 gegenüber der Symmetriemittelachse 64 des Drehschiebergehäuses 1 als in der Formgebung komplizierter Raum ausgebildet. Dieser Raum wird im Drehschiebergehäuse relativ einfach dadurch hergestellt, daß durch spanabhebende Bearbeitung die in Fig. 1 dargestellte Wandungshinterschneidung 13 eingearbeitet wird, dessen axiale Länge zwar variiert, die Endlage jedoch durch die in Fig. 2 dargestellte Horizontallinie 65 begrenzt wird. Die Formgebung des Ringeinsatzes 54 wird dann mathematisch ermittelt und im Gießverfahren hergestellt.

Die dem Drehküken 5 zugewandte Stirnseite 66 der aufblasbaren Ringdichtung 12, 53 ist V-förmig ausgebildet, wobei die beiden seitlichen Schenkel 67, 68 an keiner Stelle der Ringdichtung zumindest im drucklosen Zustand mit dem Drehküken 5 in Berührung treten sollen. Im druckbeaufschlagten Zustand der Ringdichtung 12, 53 soll demnach möglichst nur die Spitze 69 der V-förmigen Stirnseite 66 in eine Linienberührung mit dem Drehküken 5 kommen, um eine möglichst hohe Flächenpressung zu erreichen. Die in der Fig. 2 dargestellte linke Stellung der Ringdichtung 53 hat an ihrer Spitze 69 einen Drehkükensteigungswinkel von $\gamma_1 \approx 40°$.

Der in dieser Stellung notwendige Freiwinkel des Schenkels 68 beträgt $\delta_1 \approx 5$ bis $10°$. Diesere Freiwinkel $\delta_1$ ist in der tiefsten Lage der Dichtungsanordnung zu messen, d. h. in dem Bereich, wo der Anstiegswinkel $\gamma$ des Drehkükens 5 seinen größten Wert hat.

Der Anstiegswinkel $\delta_2$ des Schenkels 67 gegenüber der Horizontalen 70 in Fig. 2 braucht nicht so groß ausgeführt zu werden, wie der Anstiegswinkel $\delta_3 = \gamma_1 + \delta_1$, da an dieser Seite keine Berührung mit dem Drehküken stattfinden kann. Dieser Winkel kann in der Größenordnung von $\delta_2 = 15°$ gegenüber der Horizontalen liegen.

In Fig. 2 ist mit $\gamma_3$ in der rechten Figurenhälfte der Anstiegswinkel des Drehkükens 5 in dieser Stellung gezeigt. Oberhalb der Symmetriemittellinie 64 des Drehschiebergehäuses ist $\gamma_2 = 0$, d. h. in diesem Punkt liegt keine Versetzung der beiden seitlichen Flanken des Ringkanals vor.

Im übrigen sind in Fig. 2 gleiche Teile mit gleichen Bezugszeichen wie in den vorhergehenden Figuren, soweit erforderlich, eingezeichnet.

In Fig. 3 ist eine mechanische Rückhaltevorrichtung 23 vorgesehen, bestehend aus einem konzentrisch angeordneten Formblech 24, das ein Herausgleiten der Ringdichtung 12 aus dem Ringkanal 11 verhindert. Diese Anordnung erfordert eine sehr präzise Abstimmung von Ringdichtung 12 und zu überbrückendem Dichtungsspalt, da der axiale Hub der Ringdichtung 12 trotz Druckbeaufschlagung im Druckraum 15 nicht so groß sein kann.

Die Erfindung ist nicht auf die dargestellten und beschriebenen Ausführungsbeispiele beschränkt. Sie umfaßt auch vielmehr alle fachmännischen Abwandlungen und Weiterbildungen im Rahmen des Anspruchs 1.

Insbesondere kann die Erfindung bei jeglichen Abdichtungsproblemen von Ringdichtungen gegenüber gewölbten beweglichen Maschinenteilen verwendet werden. Während der Bewegung des Maschinenteils wird die Ringdichtung druckentlastet und kann damit eine leichte Bewegbarkeit des Maschinenteils gewährleisten, ohne selbst einem Reibungsverschleiß zu unterliegen.

**Patentansprüche**

1. Dichtungsanordnung zur Abdichtung des Übergangs zwischen einem in einer zylindrischen Bohrung eines Gehäuses drehbaren Maschinenteils (5) und einem unter einem Winkel zu Radiallinien der Zylinderbohrung stehenden, in das Gehäuse mündenden zylindrischen Anschlußstutzen, um dessen Mündungsbereich ein Ringkanal mit über den Umfang unterschiedlicher axialer Erstreckung mit darin angeordneter, druckbeaufschlagbarer Ringdichtung verläuft, dadurch gekennzeichnet, daß im Ringkanal (11) hinter der Ringdichtung (12, 53) ein an die Form des Ringkanals (11) angepaßter Ringeinsatz (54) ortsfest im Anschlußflansch (9, 10, 10') angeordnet ist, dessen der Ringdichtung (12, 53) zugewandte Stirnseite (55) mit der Ringdichtung kraftschlüssig oder formschlüssig (57) verbunden ist.

2. Dichtungsanordnung nach Anspruch 1, dadurch gekennzeichnet, daß der Anschlußflansch (9, 10, 10') ein Druckmedium-Zuführventil oder -Anschluß (60) aufweist, dessen am Umfang abgedichteter Körper (61) in den Ringeinsatz (54) zur Fixierung der Lage des Ringeinsatzes (54) hineinragt, und daß der Ringeinsatz (54) vorzugsweise an seiner der Ringdichtung (12, 53) zugewandten Stirnseite (55) einen am Umfang abgedichteten Verbindungsstutzen (62) aufweist, dessen pilzförmiges hervorstehendes Ende (63) in den Hohlraum (38) der Ringdichtung (12, 53) hineinragt.

3. Dichtungsanordnung nach Anspruch 1 oder 2, dadurch gekennzeichnet, daß die Ringdichtung (12, 53) in ihrem dem Drehküken (5) zugewandten Stirnbereich (66) V-förmig ausgebildet ist, wobei zur Erzeugung einer Linienberührung der V-förmigen Spitze (69) die beiden seitlichen Schenkel (67, 68) der V-förmigen Stirnseite (66) an keiner Stelle der Ringdichtung, zumindest im drucklosen Zustand, mit dem Drehküken (5) in Berührung treten.

4. Dichtungsanordnung nach einem der Ansprüche 1 bis 3, dadurch gekennzeichnet, daß der Ringkanal (11) durch eine Wandungshinterschneidung (13) im Anschlußflansch (9, 10, 10') gebildet wird und einen rechtwinklig zur Anschlußleitungsmittelachse (19) verlaufenden Nutgrund (65) aufweist und daß zur Bildung eines seitlich geschlossenen Ringkanals (11) ein in den Gehäuseanschlußflansch (9, 10, 10') einsetzbares Einschubrohr (14) vorgesehen ist.

5. Dichtungsanordnung nach einem der Ansprüche 1 bis 4, dadurch gekennzeichnet, daß zur Begrenzung des axialen Hubs der gegen das gewölbte, bewegliche Maschinenteil (5) unmittelbar oder mittelbar anpreßbaren Ringdichtung (12,53) im Ringkanal oder in der Ringdichtung selbst Mittel vorgesehen sind, die die Ringdichtung im Ringkanal fixieren.

6. Dichtungsanordnung nach einem der Ansprüche 1 bis 5, dadurch gekennzeichnet, daß hinter der Ringdichtung und/oder in der Ringdichtung selbst ein Druckraum (15, 38) für Druckmedium vorgesehen ist.

7. Dichtungsanordnung nach Anspruch 1, dadurch gekennzeichnet, daß die Ringdichtung (12, 53) im drucklosen Zustand von der Oberfläche des abzudichtenden Maschinenteils (5) abhebbar ist, wobei mechanische Mittel (54) zur Zurückhaltung der Ringdichtung im Ringkanal (11) vorgesehen sind.

8. Dichtungsanordnung nach einem der Ansprüche 1 bis 7, dadurch gekennzeichnet, daß die Ringdichtung (12, 53) als in ihrem unteren Abdichtungsbereich aufblasbare Dichtung mit einem Innenhohlraum ausgebildet ist, wobei der hinter der Ringdichtung (12, 53) angeordnete Ringkanalbereich (15) und/oder die Ringdichtung selbst mit Druckmedium beaufschlagbar ist.

9. Dichtungsanordnung nach der Ansprüche 1 bis 8, dadurch gekennzeichnet, daß die Ringdichtung (12, 53) im Ringkanal (11) seitlich fest gehalten, insbesondere eingeklebt ist.

10. Dichtungsanordnung nach einem der Ansprüche 1 bis 9, dadurch gekennzeichnet, daß der Ringeinsatz (54) wenigstens eine Längsbohrung (58) zur Zuführung von Druckmedium zur Ringdichtung (12, 53) aufweist.

**Claims**

1. A sealing arrangement for sealing the transition between a machine part (5) adapted to rotate in a cylindrical bore in a housing and, disposed at an angle to radial lines of the cylinder bore and opening out into the housing, a cylindrical connecting union around the mouth area of which extends an annular passage with an axial extension which varies over the periphery and with, disposed therein, an annular seal to which pressure can be applied, characterised in that in the annular passage (11), behind the annular seal (12, 53), there is adapted to the shape of the annular passage (11) an annular insert (54) which is stationary in the connecting flange (9, 10, 10') and of which the end face (55) which is towards the annular seal (12, 53) is force-lockingly or form-lockingly (57) connected to the annular seal.

2. A sealing arrangement according to Claim 1, characterised in that the connecting flange (9, 10, 10') comprises a pressure medium supply valve or connection (60) of which the body (61) sealed at the periphery projects into the annular insert (54) to fix the position of the annular insert (54) and in that this latter, preferably at its end face (55) which is towards the annular seal (12, 53), has, sealed on the periphery, a connecting union (62) of which the mushroom-like projecting end (63) protrudes into the cavity (38) in the annular seal (12, 53).

3. A sealing arrangement according to Claim 1 or 2, characterised in that the annular seal (12, 53) is of V-shaped construction in its end zone (66) which is towards the pivotable plug (5), whereby in order to generate a linear contact of the V-shaped points (69), the two lateral arms (67, 68) of the V-shaped end (66) do not, at any point around the annular seal, come in contact with the rotary plug (5), at least in the pressureless state.

4. A sealing arrangement according to one of Claims 1 to 3, characterised in that the annular passage (11) is formed by a back-taper (13) cut into the wall of the connecting flange (9, 10, 10') and has a groove bottom (65) extending substantially at a right-angle to the central axis (19) through the connecting line and in that to form a laterally closed annular passage (11), a push-in tube is provided which can be inserted into the housing connecting flange (9, 10, 10').

**5.** A sealing arrangement according to one of Claims 1 to 4, characterised in that to limit the axial travel of the annular seal (12, 53) which can be pressed directly or indirectly against the convexly curved movable machine part (5), means are provided in the annular channel or in the annular seal itself to fix the annular seal in the annular channel.

**6.** A sealing arrangement according to one of Claims 1 to 5, characterised in that a pressure space (15, 38) for pressurised medium is provided behind the annular seal and/or in the annular seal itself.

**7.** A sealing arrangement according to Claim 1, characterised in that in the pressureless state, the annular seal (12, 53) can be lifted off the surface of the machine part (5) which is to be sealed, mechanical means (54) being provided to retain the annular seal in the annular channel (11).

**8.** A sealing arrangement according to one of Claims 1 to 7, characterised in that the annular seal (12, 53) is constructed as a gasket with a cavity and the bottom sealing portion of which can be inflated, the portion (15) of the annular channel which is disposed behind the annular seal (12, 53) and/or the annular seal itself can be subject to the action of a pressurised medium.

**9.** A sealing arrangement according to Claims 1 to 8, characterised in that the annular seal (12, 53) is laterally rigidly held and is in particular glued in place in the annular channel (11).

**10.** A sealing arrangement according to one of Claims 1 to 9, characterised in that the annular insert (54) comprises at least one longitudinal bore (58) for supplying pressurised medium to the annular seal (12, 53).

**Revendications**

**1.** Dispositif d'étanchéité pour étanchéifier la jonction entre une partie de machine (5) pouvant tourner dans un perçage cylindrique d'un carter et un manchon de raccordement cylindrique, débouchant dans le carter et présentant un angle par rapport aux lignes radiales du perçage cylindrique, manchon autour de la zone d'embouchure duquel s'étend un canal annulaire ayant une extension axiale différente sur la périphérie, avec un joint étanche annulaire qui y est agencé et qui peut être sollicité par de la pression,

caractérisé en ce que, dans le canal annulaire (11) derrière le joint étanche annulaire (12,53), est agencée, de façon stationnaire dans la bride de raccordement (9,10,10'), une pièce rapportée annulaire (54) adaptée à la forme du canal annulaire (11), dont la face frontale (55) en regard du joint étanche annulaire (12,53) est reliée au joint étanche annulaire par adhérence ou mécaniquement (57).

**2.** Dispositif d'étanchéité selon la revendication 1, caractérisé en ce que la bride de raccordement (9,10,10') présente un raccord ou une soupape d'amenée de fluide de pression (60), dont le corps (61) étanchéifié à la périphérie fait saillie dans la pièce rapportée annulaire (54) pour fixer la position de la pièce rapportée annulaire (54), et en ce que la pièce rapportée annulaire (54) présente, de préférence, sur sa face frontale (55) en regard du joint étanche annulaire (12,53), un manchon de liaison (62) étanchéifié à la périphérie, dont l'extrémité en saillie en forme de champignon (63) fait saillie dans la cavité (38) du joint étanche annulaire (12,53).

**3.** Dispositif d'étanchéité selon la revendication 1 ou 2,
caractérisé en ce que le joint étanche annulaire (12,53) présente une forme de V dans sa zone frontale (66) en regard du boisseau rotatif (5), les deux branches latérales (67,68) de la face frontale en forme de V (66) n'étant en contact avec le boisseau rotatif (5) en aucun point du joint étanche annulaire, au moins dans l'état sans pression, pour engendrer un contact linéaire de la pointe (69) en forme de V.

**4.** Dispositif d'étanchéité selon une des revendications 1 à 3,
caractérisé en ce que le canal annulaire (11) est formé par une contre-dépouille (13) dans la bride de raccordement (9,10,10'), et présente un fond de gorge (65) s'étendant perpendiculairement à l'axe central (19) du conduit de raccordement, et en ce que, pour former un canal annulaire (11) latéralement fermé, un tube (14) pouvant être inséré dans la bride de raccordement du carter (9,10,10') est prévu.

**5.** Dispositif d'étanchéité selon une des revendications 1 à 4,
caractérisé en ce que, pour limiter la course axiale du joint étanche annulaire (12,53) pouvant être pressé directement ou indirectement contre la partie de machine mobile cintrée (5), des moyens sont prévus dans le canal annulaire ou dans le joint étanche annulaire lui-même, qui fixent le joint étanche dans le canal.

6. Dispositif d'étanchéité selon une des revendications 1 à 5,
caractérisé en ce que, derrière le joint étanche annulaire et/ou dans le joint étanche annulaire lui-même, est prévu un espace de pression (15,38) pour le fluide de pression.

7. Dispositif d'étanchéité selon la revendication 1, caractérisé en ce que le joint étanche annulaire (12,53) peut être soulevé, dans l'état sans pression, de la surface de la pièce de machine (5) à étanchéifier, des moyens mécaniques (54) étant prévus dans le canal annulaire (11) pour retenir le joint étanche annulaire.

8. Dispositif d'étanchéité selon une des revendications 1 à 7,
caractérisé en ce que le joint étanche annulaire (12,53) est réalisé en tant que joint étanche gonflable dans sa zone d'étanchéification inférieure et présentant une cavité interne, la zone (15) du canal annulaire disposée derrière le joint étanche annulaire (12,53) et/ou le joint étanche annulaire lui-même pouvant être alimentés en fluide de pression.

9. Dispositif d'étanchéité selon les revendications 1 à 8,
caractérisé en ce que le joint étanche annulaire (12,53) est maintenu latéralement, en particulier collé, dans le canal annulaire (11).

10. Dispositif d'étanchéité selon une des revendications 1 à 9,
caractérisé en ce que la pièce rapportée annulaire (54) présente au moins un perçage longitudinal (58) pour amener le fluide de pression au joint étanche annulaire (12,53).

Fig. 1

Fig. 1a

Fig. 2

Fig 3